(19) Europäisches Patentamt
European Patent Office
Office européen des brevets

(11) **EP 3 942 168 B1**

(12) **FASCICULE DE BREVET EUROPEEN**

(45) Date de publication et mention de la délivrance du brevet:
**10.07.2024 Bulletin 2024/28**

(21) Numéro de dépôt: **20712347.2**

(22) Date de dépôt: **19.03.2020**

(51) Classification Internationale des Brevets (IPC):
**F02C 7/232** (2006.01)  **F02C 9/26** (2006.01)

(52) Classification Coopérative des Brevets (CPC):
**F02C 9/263; F02C 7/232;** F05D 2260/80

(86) Numéro de dépôt international:
**PCT/EP2020/057694**

(87) Numéro de publication internationale:
**WO 2020/188059 (24.09.2020 Gazette 2020/39)**

(54) **PROCÉDÉ DE SURVEILLANCE DE L'ÉTAT DE FONCTIONNEMENT D'UN BLOC HYDROMÉCANIQUE**

VERFAHREN ZUR ÜBERWACHUNG DES BETRIEBSZUSTANDES EINER HYDROMECHANISCHEN EINHEIT

METHOD FOR MONITORING THE OPERATING STATE OF A HYDROMECHANICAL UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.03.2019 FR 1902801**

(43) Date de publication de la demande:
**26.01.2022 Bulletin 2022/04**

(73) Titulaire: **SAFRAN AIRCRAFT ENGINES 75015 Paris (FR)**

(72) Inventeurs:
• **JOUDAREFF, Arnaud Bernard Clément Thomas 77550 MOISSY-CRAMAYEL (FR)**
• **FOIRET, Guilhem Alcide Auguste 77550 MOISSY-CRAMAYEL (FR)**

(74) Mandataire: **Regimbeau 20, rue de Chazelles 75847 Paris Cedex 17 (FR)**

(56) Documents cités:
**FR-A1- 2 966 518   FR-A1- 3 053 396**

**Description**

**DOMAINE DE L'INVENTION**

L'invention concerne le domaine des unités de dosage de carburant, ou bloc hydromécanique sur les moteurs d'aéronefs, en particulier les turbomachines.

L'invention concerne en particulier un procédé de surveillance de l'état de fonctionnement d'un bloc hydromécanique de turbomachine d'un aéronef.

**ETAT DE LA TECHNIQUE**

Les moteurs actuels sont équipés d'une unité de dosage carburant, un bloc hydromécanique nommé plus communément FMU (*« Fuel Metering Unit »*).

Le bloc hydromécanique communalise plusieurs fonctions. Il assure le dosage du carburant, c'est-à-dire l'information de débit qui découle d'un besoin dicté par une unité de contrôle de l'aéronef en fonction de la phase de vol, avec la précision relative exigée. Il permet aussi la coupure de carburant suite à commande pilote, et la coupure et/ou régulation du débit carburant dans le cas d'urgence d'une survitesse détectée par un capteur de régime de la partie haute et/ou basse pression du moteur. Enfin, il maintient un niveau de pression minimal dans le circuit carburant et permet la commande des géométries variables actionnées avec la puissance disponible dans le circuit.

Une fois produit, monté et réglé, un bloc hydromécanique passe une ATP *(« Acceptance Test Procédure »)* pour vérifier que ses performances sont cohérentes de sa spécification.

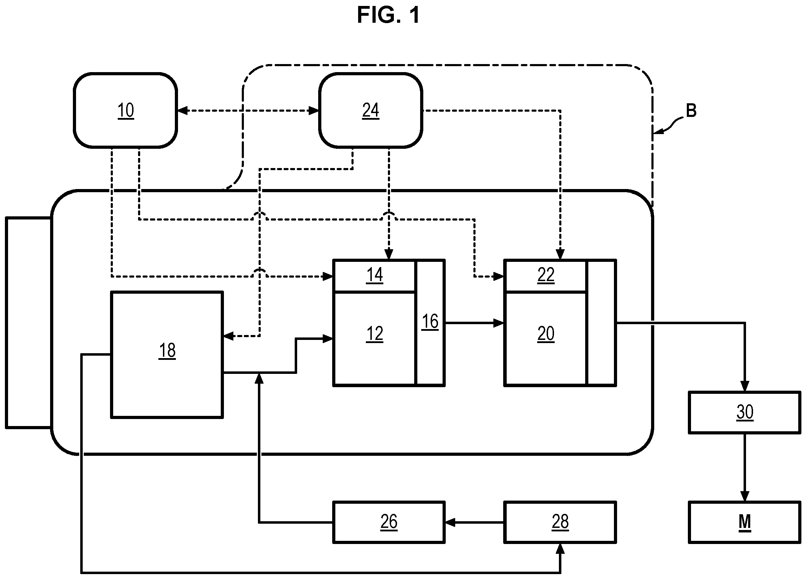

Comme illustré en **figure 1,** un bloc hydromécanique B, piloté par une unité de contrôle 10 du moteur de l'aéronef est composé de plusieurs sous-systèmes :

- une vanne de dosage 12 ou FMV pour « *Fuel Metering Valve* », qui a pour principale fonction de contrôler le débit d'injection par l'obturation graduelle d'une fente calibrée de passage de carburant à l'aide d'une pièce mobile, généralement appelé obturateur,

- une servovalve 14 reliée au doseur permettant la mise en mouvement de la vanne 12,

- un capteur de position 16 associé à cette vanne 12 (FMV) pour communiquer sa position au calculateur en temps réel,

- une soupape de régulation 18 ou « *By-pass Valve* », assurant une recirculation de carburant non injecté (en fonction de la demande de débit). La soupape 18 sert aussi à maintenir constant le différentiel de pression de carburant $\Delta P$ entre l'amont et l'aval de la vanne de dosage 12, elle consiste typiquement en un dispositif purement passif comprenant un obturateur mobile agissant contre l'action d'un ressort taré sur une valeur prédéterminée du différentiel $\Delta P$ à maintenir. L'obturateur est généralement perforé de manière à évacuer du carburant sur une canalisation menant à la boucle de recirculation, en fonction de sa position d'équilibre contre l'action du ressort,

- un clapet stop 20 ou HPSOV pour « *High Pressure Shut-off V*alve », permettant l'injection ou non du carburant,

- une servovalve 22 associée, qui commande le clapet stop et donc l'injection de carburant,

- un solénoïde 24, appelé OSS pour « *Overspeed Solenoid »,* qui assure une fonction redondante d'arrêt d'injection de carburant, utilisée en cas d'urgence.

La vanne de dosage 12 constitue une vanne pilotée pour doser le débit de carburant envoyé aux injecteurs de la chambre de combustion du moteur.

Le bloc hydromécanique B alimente ainsi un moteur M en carburant.

Tous ces différents éléments fonctionnent en interrelation, sur commande de l'unité de contrôle 10 qui les pilotent un par un. Les flèches en pointillés symbolisent des transferts d'information. Les flèches pleines symbolisent des transferts de fluides (carburant).

Le bloc hydromécanique B bénéficie d'un circuit carburant associé provisionnant une alimentation en carburant par un système de pompage 26 associé depuis un réservoir 28.

Un circuit carburant interne à l'équipement permet en outre l'actionnement hydraulique des actionneurs impliqués dans le fonctionnement du bloc hydromécanique.

Un débitmètre 30, appelé WFM pour « WFM *Water Flow Monitor »* est intégré dans le périmètre moteur, afin de permettre de connaître la consommation de carburant en sortie du bloc hydromécanique B.

Pour ajuster la consigne de débit, il est nécessaire de calculer un débit dit reconstruit Qr. Ce débit correspond au débit théorique traversant la vanne de dosage. En particulier, la relation fondamentale suivante est utilisée :

[Math. 1]

$$Qr = K_s S \sqrt{\rho \Delta P}$$

Ks est un paramètre considéré comme lié à la géométrie de la vanne, S est la section de passage, $\rho$ est la masse volumique et $\Delta P$ est l'écart de pression aux bornes de la vanne de dosage.

Le bloc hydromécanique est un équipement complexe dont les différents composants peuvent s'user avec le temps et modifier la loi de dosage (débit dosé en fonction de la position du doseur) qui a été vérifiée en essais de production.

Une dégradation progressive ne se révélera probablement pas sur le comportement du moteur, ni de manière significative ni dangereuse. En effet, en règle générale la poussée fournie par les moteurs est régulée en boucle fermée sur le régime de rotation du moteur (nombre de tours par minute). Si un bloc hydromécanique se dégrade et voit sa loi de dosage modifiée, en régime stabilisé la régulation du moteur s'adaptera et compensera cette erreur.

En revanche, à partir d'un certain degré de dégradation, cette erreur au sein de la loi de dosage pourrait dégrader la performance de conduite du moteur.

De plus, certains « modes de régulation » du moteur font appel à la précision de dosage.

Enfin, le démarrage du moteur utilise lui entièrement et uniquement la précision de dosage. Toute dégradation au niveau du FMU impactera donc directement ces lois, avec pour conséquences possibles des risques de pompage du moteur ou d'extinction de la chambre de combustion.

En sus du prix de la réparation ou du changement de l'équipement, le coût opérationnel lié à une panne du moteur peut se révéler très important pour la compagnie aérienne exploitante.

Plus on détecte tôt une dégradation d'un équipement moteur, plus grandes sont les chances de réaliser l'opération de maintenance avant d'avoir un impact opérationnel.

Le document FR-2 966 518 divulgue un procédé de commande d'un dispositif de dosage de carburant pour turbomachine en fonction d'une consigne de débit massique et comprend la sélection, en fonction d'au moins un critère de validité, d'un débit massique.

## EXPOSE DE L'INVENTION

La solution technique proposée permet de couvrir ces cas de dégradation progressive d'un bloc de dosage et ainsi d'éviter des évènements opérationnels pour la compagnie qui exploite l'avion.

Dans ce but, l'invention propose un procédé de surveillance de l'état de fonctionnement d'un bloc hydromécanique de turbomachine d'un aéronef selon la revendication 1.

Avantageusement, le procédé comprend également les caractéristiques suivantes :

- les étapes de détermination d'un débit reconstruit, de calcul du résidu sont mises en oeuvre pour différents points stabilisés du domaine de vol de l'aéronef, permettant d'obtenir un vecteur de résidus, ledit vecteur de résidus étant comparé à un vecteur de valeurs seuil déterminées pour lesdits différents points stabilisés afin de déterminer l'état de fonctionnement du bloc hydromécanique ;
- ledit résidu est stocké dans une mémoire du module de surveillance ;
- le bloc hydromécanique comporte également

  ◦ un capteur de pression différentielle aux bornes de la vanne de dosage,
  ◦ un capteur de température configuré pour mesurer une température du carburant,

  et dans lequel le débit reconstruit est également déterminé à partir des données de pression différentielle mesurée par le capteur de pression différentielle et de température mesurée par le capteur de température ;
- la détermination d'un état anormal du bloc hydromécanique comporte pour les mesures de température, et/ou de densité, et/ou de position du doseur, et/ou de pression différentielle, les étapes de

  ◦ comparaison d'au moins une desdites mesures à un intervalle de valeur nominale d'un capteur à partir duquel la mesure est obtenue, et
  ◦ détermination d'un état de fonctionnement anormal du bloc hydromécanique correspondant à une panne ou à une dégradation du capteur, et/ou à une panne ou une dégradation d'un organe interne du bloc hydromécanique associé audit capteur, en fonction du résultat de la comparaison ;

- le procédé comporte également les étapes de

  ◦ comparaison de la mesure obtenue à partir d'un desdits capteurs à une valeur de référence déterminée dudit capteur ;
  ◦ détermination d'un état de fonctionnement anormal du bloc hydromécanique correspondant à une dégradation du capteur ou de l'organe interne du bloc hydromécanique associé audit capteur, en fonction du résultat de la comparaison.

- la valeur de référence est une valeur représentative de valeurs précédemment mesurées ;
- le procédé comporte également les étapes de :

  ◦ consolidation du débit carburant reconstitué grâce aux mesures de pression, température, densité avec l'acquisition du débit massique ;
  ◦ comparaison du débit carburant consolidé à une valeur de débit de référence ; et si la différence est supérieure à une valeur seuil déterminée
  ◦ détermination d'un état de fonctionnement anormal du bloc hydromécanique correspondant à une dégradation de la loi de dosage.

L'invention propose également un dispositif de régulation de carburant pour aéronef comprenant un bloc hydromécanique, ledit bloc hydromécanique comprenant :

- une vanne de dosage comprenant une pièce mobile de dosage et permettant de générer un débit passant en fonction notamment de la position de cette pièce mobile,
- une soupape de régulation configurée pour maintenir un écart de pression prédéterminé aux bornes de la vanne de dosage afin notamment de contrôler le débit au travers de la vanne de dosage,
- un débitmètre apte à mesurer le débit massique de carburant traversant la vanne de dosage,

caractérisé en ce que le dispositif de régulation de carburant comporte un module de surveillance configuré pour la mise en oeuvre du procédé selon les étapes précédemment décrites.

Avantageusement, le dispositif de régulation comporte également :

- un capteur de pression différentielle aux bornes de la vanne de dosage,
- un capteur de température configuré pour mesurer une température du carburant, le module de surveillance étant configuré pour la mise en oeuvre du procédé selon les étapes précédemment décrites.

Avantageusement, l'invention permet la surveillance de la dégradation de la loi de dosage d'un bloc hydromécanique ainsi que du vieillissement / dégradation des sous organes de l'équipement. Un indicateur de suivi utilise une mesure de débit massique comparée à une estimation utilisant des mesures de position, de densité du fluide dosé et de différence de pression aux bornes du doseur. Cet indicateur peut être extrait à différents points de fonctionnement au cours d'un vol, et permet un suivi en tendance, c'est-à-dire de vol en vol.

L'ensemble de ces surveillances permet de prévenir et caractériser le vieillissement des sous-organes, aussi bien que de repérer des pannes en cours d'établissement ou dormantes. Le stockage de ce diagnostic en mémoire interne à l'équipement permet à l'opérateur de maintenance d'enrichir sa connaissance de l'équipement au fil des heures de vol, et surtout de prévoir de manière plus agile de la maintenance programmée, ainsi qu'évaluer justement la pertinence financière de faire de la maintenance à l'échelle micro au sein de l'équipement ou bien d'ordonner un remplacement.

Cette surveillance permet d'anticiper des pannes du bloc hydromécanique avant qu'elles ne créent un impact opérationnel pour la compagnie aérienne exploitante.

DESCRIPTION DES FIGURES

D'autres caractéristiques, buts et avantages de l'invention ressortiront de la description qui suit, qui est purement illustrative et non limitative, et qui doit être lue en regard des dessins annexés, sur lesquels :

- La figure 1 représente une architecture de bloc hydromécanique telle que connue de l'art antérieur,
- La figure 2 représente une architecture conforme à un mode de réalisation de l'invention,
- La figure 3 représente des étapes d'un procédé conforme à un premier mode de réalisation de l'invention,

- La figure 4 représente des étapes d'un procédé conforme à un second mode de réalisation de l'invention, et
- La figure 5 représente de façon plus détaillée des étapes d'un procédé conforme à un second mode de réalisation de l'invention.

## DESCRIPTION DETAILLEE DE L'INVENTION

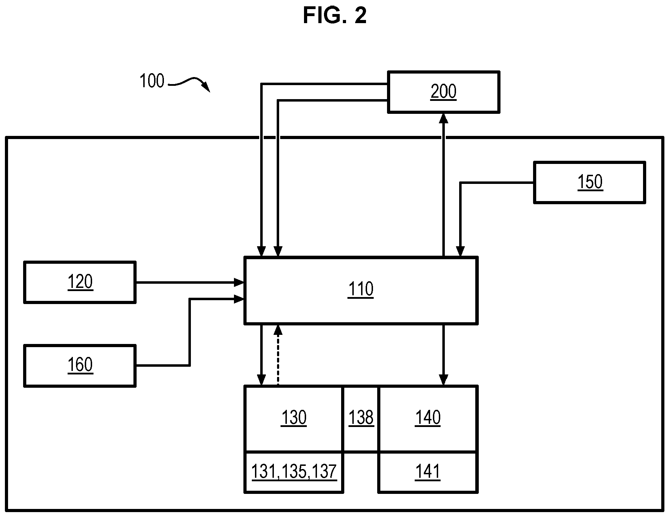

En référence à la figure 2, un dispositif de régulation de carburant va être décrit. Ce dispositif permet de gérer l'alimentation en carburant d'une turbine à gaz d'un aéronef (avion, hélicoptère, etc.). La turbine à gaz peut être une turbomachine, comme un turbopropulseur ou un turboréacteur.

Le dispositif de régulation de carburant comprend un bloc hydromécanique 100 et un débitmètre massique 150. Par débitmètre, on entend tout appareil de mesure permettant de connaître un débit massique de fluide, en l'occurrence un débit de carburant liquide ici.

Le bloc hydromécanique 100 comprend une vanne de dosage 130 qui gère l'écoulement de fluide. La vanne de dosage 130 comprend une surface, appelée surface d'ouverture du doseur carburant S, de taille variable, qui permet l'écoulement du liquide. Le débit Q délivré par la vanne de dosage 130 est donc notamment fonction de la surface S.

La surface S est variable sur pilotage d'une servovalve 135, qui commande le déplacement d'une pièce mobile 138 de dosage pour obstruer graduellement un orifice ou fente de dosage. Un ressort de maintien 137 tend à ramener la pièce mobile 138 vers une position par défaut, correspondant généralement à la plus petite section de passage de la fente de dosage, c'est-à-dire au débit de carburant minimum (débit de ralenti). Un capteur de position 131, relié à la carte électronique 110, permet de connaître la position de la pièce mobile. Le capteur de position est typiquement un capteur LDVT (« *linear variable differential transformer / transducer* »). La position de la pièce mobile est donc connue. La surface S peut ensuite être calculée, mais cette étape n'est plus nécessaire dans le cadre de l'invention.

Il existe différents types de vanne de dosage 130, par exemple à fente de dosage classique, décrite dans le document US7526911 B2, ou à fente exponentielle, décrite dans les documents EP1231368A1 et FR2825120A1. Dans le cas d'une fente exponentielle, l'ouverture S augmente exponentiellement avec le déplacement de la pièce mobile, qui permet une meilleure précision à bas débit.

Le bloc hydromécanique 100 comprend de plus une soupape de régulation 140, assurant une recirculation de carburant non injecté, et servant aussi à maintenir constant le différentiel de pression de carburant ∆P entre l'amont et l'aval de la vanne de dosage 130. Cette soupape 140 peut être identique à la soupape de régulation 18 commentée en référence à la figure 1. Un capteur de pression différentielle 141, associé à la soupape de régulation 140, acquière la pression différentielle aux bornes de la vanne de dosage 130

Le bloc hydromécanique 100 comprend en outre une carte électronique 110. La carte électronique 110 communique avec la vanne de dosage 130 dans les deux sens : elle peut envoyer des consignes de position à la vanne 130 et récupérer des données relatives à la vanne 130. Elle communique aussi avec le débitmètre 150 : du fait de son rôle de capteur, la communication ne se fait que dans un sens, de sorte que le débitmètre 150 peut envoyer la mesure du débit (ou une donnée devant être convertie en débit) à la carte électronique 110.

La carte électronique 110 est en outre reliée à une unité de contrôle 200, externe au dispositif. L'unité de contrôle 200 est typiquement un module de régulation électronique (ECU) d'un FADEC, c'est-à-dire d'un système de régulation numérique pleine autorité qui contrôle les géométries variables (actionneurs, doseurs, etc.) de l'aéronef. L'unité de contrôle 200 se trouve dans le périmètre avion et n'est pas dédié uniquement à la régulation du carburant. Inversement, la carte électronique 110 est préférablement exclusivement dédiée au dosage du carburant et aux fonctions annexes. La liaison entre l'unité de contrôle 200 et la carte électronique 110 se fait généralement avec un harnais de connexion.

Un capteur de température 160 est aussi prévu. Il permet de connaître la température du carburant lorsque celui traverse le dispositif de régulation. Dans un mode de réalisation avantageux, le capteur 160 est intégré au bloc hydromécanique 100.

Le bloc hydromécanique 100 comprend en outre un module de mémoire 120 configuré pour stocker des informations relatives à la vanne de dosage 130, à la soupape de régulation 140 et/ou au débitmètre 150. Le module de mémoire 120 est relié à la carte électronique 110 qui peut y récupérer des données.

Dans un mode de réalisation, la carte électronique 110 a pour rôle de centraliser les communications, sans calculer ni traiter de données. Par conséquent, les données relatives à la vanne de dosage 130, le débitmètre 150 et les caractéristiques stockées dans le module de mémoire 120 sont envoyés par la carte électronique 110 vers l'unité de contrôle 200 qui effectuent les calculs.

Dans un autre mode de réalisation, la carte électronique 110 embarque du logiciel et peut générer des commandes.

Le module de mémoire 120 est compris dans bloc hydromécanique 100 pour simplifier les opérations de maintenance, et pour permettre un remplacement de tout le bloc hydromécanique 100. Comme les données stockées dans le module de mémoire 120 sont propres à chaque vanne de dosage 130 ou chaque soupape de régulation 140, ou chaque débitmètre 150, un changement de de l'un de ces éléments implique des nouvelles données.

Les données stockées sur le module de mémoire 120 ont pour fonction d'affiner la précision du dosage de carburant. Ces données sont obtenues lors d'essai de réception sur la vanne de dosage 130, la soupape de régulation 140, et le débitmètre 150 et permettent ensuite, une fois en vol, de déterminer un débit reconstruit Qr plus précis, qui permet ensuite de recaler plus finalement la consigne de débit générée.

Un des avantages majeurs est la meilleure précision du dosage du carburant, ce qui permet, par exemple dans le cas d'un moteur d'aéronef, de faire baisser la consommation grâce à un dimensionnement plus ajusté du compresseur haute pression d'une turbomachine, et ainsi de diminuer les quantités de carburant à embarquer avant le vol, marges comprises. Cela permet de redimensionner l'aéronef et, *de facto,* la puissance des moteurs.

En outre, cela a un impact très favorable sur l'opérabilité du moteur (meilleure facilité d'accélération, etc.).

La vanne de dosage 130 est régie par une loi de dosage, s'exprimant sous la forme suivante :

[Math. 2]

$$Q = K_s S \sqrt{\rho \Delta P}$$

Où :

- Q est le débit massique,
- $K_s$ un paramètre relatif à la vanne de dosage 130, qui dépend la géométrie de la fente (longueur, diamètre, etc.) ainsi que de son aspect de surface (rugosité, etc.), du diamètre amont-aval de la canalisation de la vanne de dosage 130, et du nombre de Reynolds qui caractérise l'écoulement,
- S est la surface de passage, telle qu'introduite précédemment,
- $\rho$ est la densité du carburant,
- $\Delta P$ est l'écart pression aux bornes de la vanne de dosage 130, maintenu par la soupape de régulation 140.

En pratique, $\Delta P$ et $\rho$ sont fonction de la température T du carburant. Par conséquent, dès lors que leurs valeurs effectives sont différentes de celles considérées pour déterminer la loi de dosage en banc d'essai, des erreurs de dosage sont nécessairement générées en vol.

Ainsi, pour remédier à cela, plusieurs caractérisations de la vanne de dosage 130 et du débitmètre 150 sont effectuées sur banc d'essai au sol.

Une première caractérisation consiste à connaître la sensibilité de l'écart de pression $\Delta P$ par rapport à la température T.

La différence de pression $\Delta P$ est régulée de façon constate grâce à une soupape de régulation (présentée en introduction et dans la présente description) qui utilise un ressort de raideur k$\Delta P$. Or, ce ressort se dilate en fonction de la température du carburant : la raideur du ressort diminue lorsque la température augmente. Ainsi, des tests permettent de connaître l'évolution de k$\Delta P$ en fonction de la température T, ce qui permet ensuite de connaître $\Delta P$ en fonction de la température T.

Le module de mémoire 120 comprend donc un abaque, sous forme d'un tableur, associant à différentes valeurs de température T soit des raideurs k$\Delta P$ auxquelles sont associés des écarts de pression $\Delta P$, soit directement $\Delta P$. A l'aide de la valeur de température T obtenue par le capteur de température 160, on peut connaître une valeur $\Delta P$ appliquée aux bornes de la vanne de dosage 130 qui soit plus proche de la valeur réelle.

A partir de cette valeur $\Delta P$ obtenue, il est ainsi possible de déterminer un débit massique reconstruit Qr avec une meilleure précision.

A présent, un procédé de surveillance de l'état de fonctionnement d'un bloc hydromécanique, selon un premier mode de réalisation, va être décrit.

Ce procédé est avantageusement mis en oeuvre à l'aide d'un module surveillance 300, associé au bloc hydromécanique, et comprenant un calculateur. Par le terme calculateur, il est désigné notamment un contrôleur/unité de commande de dispositifs physiques, et comprenant usuellement un processeur, des mémoires, des interfaces d'entrée-sortie. Le calculateur est représenté physiquement par une ou plusieurs cartes électroniques implémentant ses fonctionnalités.

*Premier mode de réalisation*

Le module surveillance 300 peut être implémenté dans une unité de contrôle d'un dispositif de régulation telle que décrite dans la figure 1 ou 2.

Alternativement, le module surveillance 300 peut être implémenté dans une carte électronique 110 d'un dispositif de régulation telle que décrite dans la figure 2.

Le module de surveillance 300 est configuré pour utiliser la mesure de débit massique pour détecter une dérive de la loi de dosage du bloc hydromécanique en comparaison de la calibration initiale en analysant plusieurs points du domaine de vol prédéfinis : ce qui serait un signe de vieillissement ou de dégradation interne du bloc hydromécanique.

Dans la suite de la description, le procédé selon le premier mode est décrit en référence à un dispositif de régulation selon la figure 2. Bien entendu, le procédé peut être appliqué à un dispositif de régulation selon la figure 1.

Les précisions des mesures ou estimations de débit massique sont dépendantes du débit dosé, le procédé est donc mis en oeuvre pour différents points stabilisés du domaine de vol, tels que : Ralenti sol/Plein gaz/Croisière/Ralenti vol.

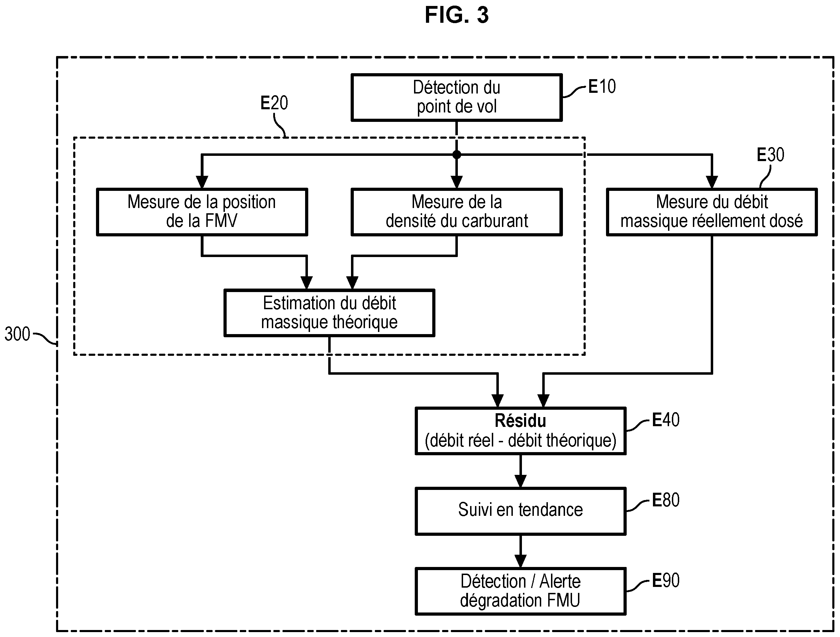

En référence à la **figure 3,** dans une première étape **E10,** le module de surveillance 300 procède à la détermination de la phase de vol de l'aéronef.

L'état de l'art de la technique permet de détecter une phase de vol exhibant un débit dosé suffisamment stable.

Dans une seconde étape **E20,** le module de surveillance 300 procède à l'estimation du débit théorique dosé. Dans ce but, le capteur de position 131 acquière, et transmet la position de la pièce mobile 138 de la vanne de dosage 130 au module de surveillance 300.

Simultanément ou alternativement, le débitmètre 150 acquière un débit, transmis au module de surveillance 300.

Le débitmètre 150 peut être également utilisé comme densimètre, comme par exemple dans la publication FR3069021A1, ce qui permet d'identifier la densité du carburant réellement dosé (celle-ci est dépendante du type de carburant utilisé ainsi que de sa température).

Comme vu précédemment, à partir de ces mesures, le module de surveillance 300 peut calculer un débit dit reconstruit Qr. Ce débit correspond au débit théorique traversant la vanne de dosage. En particulier, la relation fondamentale suivante est utilisée :

[Math. 3]

$$Qr = K_s S \sqrt{\rho \Delta P}$$

Ks est un paramètre considéré comme lié à la géométrie de la vanne, S est la section de passage, $\rho$ est la masse volumique et $\Delta P$ est l'écart de pression aux bornes de la vanne de dosage. Des tests en banc d'essai permettent de caractériser Ks qui est considéré comme constant par la suite, $\rho$ et $\Delta P$ sont fixées comme constantes, et S est calculé à partir de la position de l'obturateur.

La mesure du débit réellement dosé est considérée indépendante de l'estimation du débit théoriquement dosé.

Ensuite dans une étape E30, le module de surveillance 300 calcule la différence entre le débit reconstruit et le débit mesuré. Cette différence est appelée résidu : c'est cet indicateur qui est suivi de vol en vol pour détecter une dégradation progressive au niveau de l'organe de dosage.

Le résidu est comparé à une valeur seuil d'alerte déterminée.

Les seuils d'alerte sont généralement réglés pour correspondre à 3 écarts-types de la distribution nominale (c'est-à-dire sans dégradation) du résidu, par exemple à environ 4.3% de décalage (en surdosage ou sous-dosage) du débit réellement dosé par rapport au débit théorique de la loi de dosage.

En d'autres termes, on sera capable de détecter toute dégradation du bloc hydromécanique entraînant un décalage de 4.3% de la loi de dosage théorique.

Statistiquement on considère donc qu'on sera capable de détecter une dégradation du bloc hydromécanique avant que cette dernière ne risque de causer un impact opérationnel pour la compagnie aérienne exploitante (retard, annulation de vol ou arrêt moteur en vol) car le moteur a été conçu en prenant en compte une imprécision de dosage de l'ordre de 4%.

Néanmoins, cette performance peut être améliorée en caractérisant le débitmètre massique spécifiquement pour le moteur considéré. Cela permet ainsi de diminuer l'imprécision liée à sa mesure et d'abaisser le seuil de déclenchement de l'alarme.

Le résultat de cette comparaison est catégorisé par un écart maximum ($\epsilon$1) défini en essai de production / réception de l'organe ; pour plusieurs points de vol tels qu'explicités ci-dessus.

On obtient donc un vecteur de données d'écart pour les 4 points considérés :

## [Math. 4]

$$\varepsilon_1 = \begin{pmatrix} \varepsilon_{GI} \\ \varepsilon_{FP} \\ \varepsilon_{FP} \\ \varepsilon_{FI} \end{pmatrix}$$

Correspondant aux phases :

## [Math. 5]

$$\begin{pmatrix} Ralenti\ sol \\ Plein\ gaz \\ Croisière \\ Ralenti\ vol \end{pmatrix}$$

Si l'un de ces indicateurs est dépassé lors de la comparaison entre le débit de carburant dosé reconstitué et la valeur du débit carburant mesuré, alors un diagnostic de panne est initialisé dans une étape **E60,** par exemple, en fin de vol afin de ne pas reproduire la panne au vol suivant.

Si le résidu est inférieur à la valeur seuil déterminée, le résidu peut être mémorisé dans une étape **E50,** par exemple, dans une mémoire du module de surveillance 300. Le résidu peut être ainsi suivi en tendance, c'est-à-dire de vol en vol.

### Second mode de réalisation

Le module surveillance 300 peut être implémenté dans une unité de contrôle ou dans une carte électronique 110 d'un dispositif de régulation telles que décrites dans la figure 2.

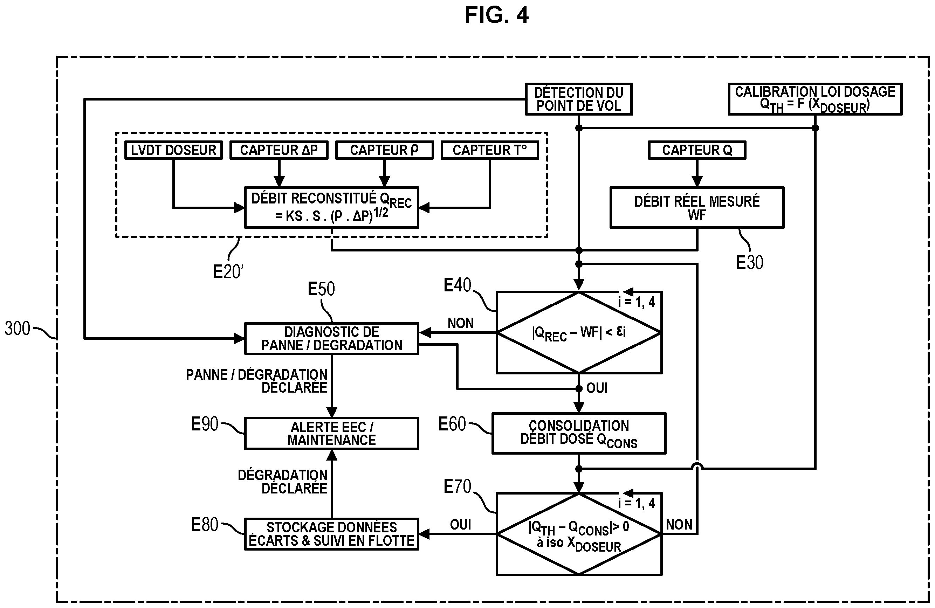

En référence à la **figure 4,** Dans une étape E10, il est procédé à une étape de détermination de détection du point de vol comme dans le premier mode de réalisation.

Dans une étape **E20',** le capteur de température 160 acquière une température. Simultanément ou alternativement, le capteur de position 131 acquière la position de la pièce mobile 138 de la vanne de dosage 130. Simultanément ou alternativement, le capteur de pression différentielle 141 acquière la pression différentielle aux bornes de la vanne de dosage 130. Simultanément ou alternativement, le débitmètre 150 acquière un débit.

Le débitmètre 150 peut être également utilisé indirectement comme densimètre, ce qui permet d'identifier la densité du carburant réellement dosé (celle-ci est dépendante du type de carburant utilisé ainsi que de sa température).

Alternativement, un capteur de densité distinct du débitmètre peut être utilisé.

A partir de ces mesures, le module de surveillance 300 peut calculer un débit dit reconstruit Qr. Ce débit correspond au débit théorique traversant la vanne de dosage. En particulier, la relation fondamentale suivante est utilisée :

## [Math. 6]

$$Qr = K_s S \sqrt{\rho \Delta P}$$

Ks est un paramètre considéré comme lié à la géométrie de la vanne, S est la section de passage, $\rho$ est la masse volumique et $\Delta P$ est l'écart de pression aux bornes de la vanne de dosage. Des tests en banc d'essai permettent de caractériser Ks qui est considéré comme constant par la suite, $\rho$ et $\Delta P$ sont fixées comme constantes, et S est calculé à partir de la position de l'obturateur.

La mesure du débit réellement dosé est considérée indépendante de l'estimation du débit théoriquement dosé.

Ensuite comme dans une étape **E30** et **E40,** du premier mode de réalisation, le module de surveillance 300 calcule la différence entre le débit reconstruit et le débit mesuré. Cette différence est appelée résidu : c'est cet indicateur qui est suivi de vol en vol pour détecter une dégradation progressive au niveau de l'organe de dosage.

Le résultat de cette comparaison est catégorisé par un écart maximum ($\varepsilon 1$) défini en essai de production / réception de l'organe ; pour plusieurs points de vol tels qu'explicités cidessus.

On obtient donc un vecteur de données d'écart pour les 4 points considérés :

[Math. 7]

$$\varepsilon_1 = \begin{pmatrix} \varepsilon_{GI} \\ \varepsilon_{FP} \\ \varepsilon_{FP} \\ \varepsilon_{FI} \end{pmatrix}$$

Correspondant aux phases :

[Math. 8]

$$\begin{pmatrix} Ralenti\ sol \\ Plein\ gaz \\ Croisière \\ Ralenti\ vol \end{pmatrix}$$

Si l'un de ces indicateurs est dépassé lors de la comparaison entre le débit de carburant dosé reconstitué et la valeur du débit carburant acquis par le contrôleur principal, alors un diagnostic de panne est initialisé dans une étape E50, par exemple, en fin de vol afin de ne pas reproduire la panne au vol suivant.

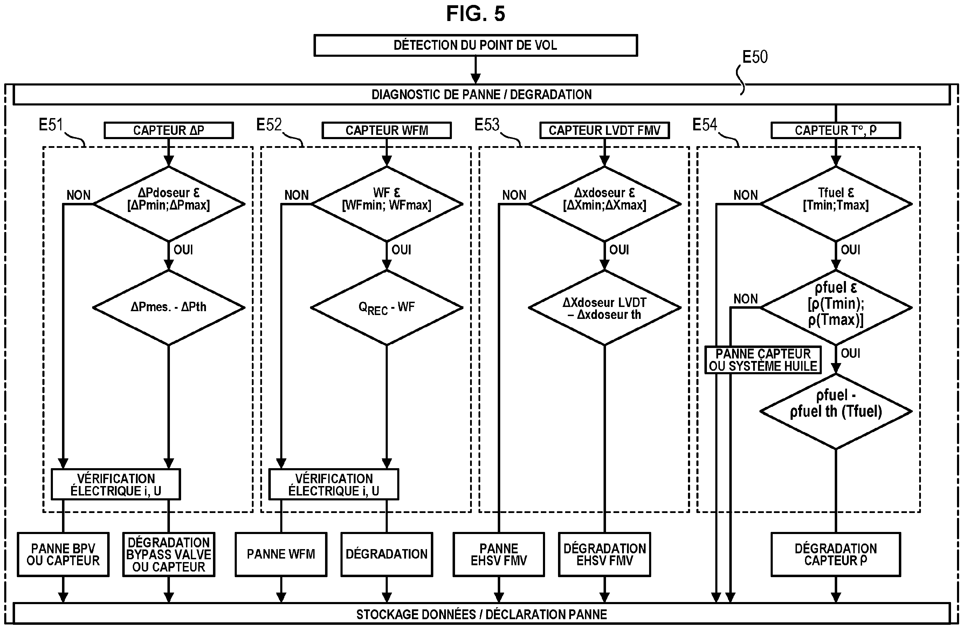

En référence à la **figure 5,** en outre de la détection de panne interne, à partir de l'analyse de la performance de dosage du bloc hydromécanique, le module de surveillance 300 peut également déterminer si des valeurs de capteur anormales (en dehors de la plage de fonctionnement prédéfinie en conception) ne sont pas dues à des pannes sur le circuit hydraulique lui-même. L'analyse de dégradation et de panne peut donc se faire sur les organes internes au bloc hydromécanique.

La modification de loi de dosage peut ainsi provenir de la mauvaise pressurisation de l'organe de dosage. En effet le doseur est dimensionné à partir d'une hypothèse de $\Delta P$ constant à ses bornes, réalisé par un organe hydraulique : la soupape régulatrice ; ce qui rend son fonctionnement prépondérant sur le dosage carburant.

- En utilisant un capteur de $\Delta P$ aux bornes du doseur, il est facile de vérifier le fonctionnement de la soupape régulatrice, et d'écarter cet organe des potentielles sources de dégradation.
- Un exemple de panne ou de dégradation serait un problème sur l'effort du ressort taré de manière à avoir un $\Delta P$ constant.

La dégradation de la loi de dosage peut également provenir d'une dégradation de la chaîne de transmission de commande depuis l'organe électrohydraulique jusqu'à l'actionneur.

- Cela peut être identifié au travers de plusieurs paramètres au sein de la chaîne de commande entre l'organe émetteur du courant de commande jusqu'à l'actionnement du doseur, notamment au travers des différentes correspondances position doseur / débit, et du gradient de position de l'actionneur (vitesse d'actionnement).
- Ce genre de pannes est très souvent attribué à une dérive de la transformation du courant de commande en mouvement de l'actionneur, la servovalve étant responsable de cette fonction.

Toutes ces sources de dégradation de la loi de dosage dans le temps viennent entacher les performances de dosage du bloc hydromécanique.

*E51-Pressurisation du doseur*

La première vérification est de comparer la valeur du paramètre à un intervalle prédéterminé en conception. Celle-ci donne l'état de santé de l'organe. Les deux sources de panne sont soit un problème capteur (qui peut être facilement vérifié par analyse croisée des tensions et courants, et de l'état du global dosage, et accommodée par un switch de voie) soit une panne réelle (panne franche ou dérive) de l'organe de pressurisation. La fonction de diagnostic associée détermine la sortie de l'intervalle défini en conception, pour alerter le calculateur central qu'une dégradation importante devenue une panne est localisée sur l'organe soupape régulatrice.

La seconde vérification permet de voir l'évolution à partir de l'entrée en service de l'organe, et de déterminer le temps de détérioration des performances jusqu'aux frontières de l'intervalle de conception à partir duquel la dispersion du $\Delta P$ a un impact trop important sur le dosage carburant. Ce monitoring permet aussi d'analyser la dérive au cours de ce paramètre hydraulique pour identifier soit une panne (qui est identifiée de toutes manière car a un fort impact sur le dosage) soit une dégradation.

La dégradation s'identifie par une amplitude de dispersion de plus en plus importante autour de valeur nominale ou une dispersion conduisant à déplacer la valeur nominale.

*E52- Mesure de débit*

La première vérification est de comparer la valeur du débit mesuré par le débitmètre à un intervalle prédéterminé en conception. Dans le cas où la valeur mesurée est en dehors de l'intervalle, cela traduit une panne du débitmètre.
Une seconde vérification permet de comparer la valeur mesurée à une valeur de référence, si l'écart entre ces deux valeurs est trop important cela traduit une dégradation du débitmètre.

*E53- Vitesse d'actionnement* du doseur

La bonne vitesse d'actionnement du doseur est aussi importante dans les variations de poussée afin de satisfaire les lois de fonctionnement du moteur.
L'origine de la panne pointée par cette vérification est plutôt d'ordre électrohydraulique (servovalve) car cela indique un temps de transformation de courant de commande en muscle hydraulique plus long qu'en nominal. Cela peut par ailleurs être à cause des circuits hydrauliques qui souffrent d'un manque de pression pour diverses raisons, voire même des fuites.
Le diagnostic permet d'effectuer une surveillance de la correspondance entre la position de l'actionneur demandée (par retour de position) vis-à-vis de la commande envoyée à l'organe électrohydraulique ; ainsi que la surveillance du gradient de position (vitesse d'actionnement).
Ceci permet de détecter une dérive de l'organe de commande électrohydraulique et détecter les prémices d'une dégradation pour le signaler en maintenance.

*E54- Mesure de densité*

Une bonne mesure de densité carburant permet de reconstruire un débit théorique de carburant avec précision, et d'améliorer la précision de dosage. Les impacts d'une mauvaise information du capteur de densité sont majoritairement sur la précision de dosage et donc un risque faible sur la régulation du débit dosé et finalement sur l'opérabilité du moteur. La densité du carburant dépend essentiellement de la nature du fluide ainsi que de sa température.
La première vérification est donc opérée sur la capacité du capteur de température à donner une information de température proche du doseur qui se situe dans l'intervalle des températures attendue.
Il existe un modèle de température carburant au sein du système carburant qui dépend de beaucoup de paramètres tels que :

- Régime HP du moteur donnant le régime de rotation de la pompe, de la recirculation de cette pompe (laminage et hausse locale de température) et de sa performance.
- Efficacité de l'échangeur huile - carburant, modèle de température du système d'huile.
- Température de carburant en amont du moteur.
- Température d'air extérieure & altitude.

Si la température mesurée n'entre pas dans l'intervalle prévu, il y a deux raisons :

- Soit la température de carburant est anormalement élevée ce qui indique une panne reliée soit à l'échangeur carburant-huile (FCOC pour Fuel-Cooled Oil Cooler) ou à un problème intrinsèque au système d'huile, soit un problème de pompe carburant, soit un évènement de sur-température du compartiment nacelle dans lequel se trouve le système.
  Dans tous les cas cela remonte un point d'attention pour les opérateurs de maintenance. L'analyse peut utiliser le modèle thermique huile.

- Soit le capteur de température est dysfonctionnel (dérive ou panne), et le mode dégradé revient à la situation actuelle : une température de carburant moyennée.

La seconde vérification dépend du moyen de mesure de la densité utilisé.

- Si la densité est fonction de la température, il n'y a pas de seconde étape de vérification car automatiquement la réponse du capteur de densité en fonction de son état de fonctionnement sera tout ou rien.
- Si la densité est indépendante de la température, et est fonction de la précision de mesure du débitmètre, cette étape de vérification dépend des conditions hydrauliques sur lesquelles le débitmètre est conçu et de son état fonctionnel.

La troisième étape de vérification permet de donner une fiabilité de la mesure au cours d'un certain nombre de plusieurs vols successifs et un vieillissement du moyen de mesure de densité.

Que ce soit au travers de la mesure de densité ou de température, cette vérification peut par ailleurs informer sur les prémices de pannes au sein du circuit d'huile comme décrit précédemment et ainsi aider sur du pronostic.

Jusqu'à ce que le diagnostic n'identifie qu'une dégradation mineure, aucune action n'est réalisée. Les résultats sont seulement stockés pour être comparés à l'itération suivante et ainsi créer une évolution des paramètres pertinents.

En revanche lorsqu'une dégradation d'un des sous organes semble trop importante vis-à-vis de l'écart repéré entre les valeurs nominales et mesurées, une alarme est déclenchée pour une analyse en maintenance.

Ultérieurement au calcul de résidu et au diagnostic de panne dans le cas où le résidu est supérieur au seuil d'alerte déterminée, le module de diagnostic 300 peut procéder à une étape E60 de consolidation de la mesure de débit reconstruite, pour la surveillance de la loi de dosage, particulièrement au niveau de la comparaison du débit dosé approximé avec la valeur théorique de dosage défini et caractérisé en essai de réception.

Ainsi, si le vecteur de données $\varepsilon 1$ n'est pas atteint, il est obtenu une consolidation du débit carburant reconstitué Qcons grâce aux différents capteurs ajoutés (T, $\rho$, $\Delta P$) avec l'acquisition du débit massique. C'est la solution la plus précise pour évaluer le vieillissement de la loi de dosage.

Si le vecteur de données $\varepsilon 1$ est atteint, la consolidation du débit carburant reconstitué Qcons est faite avec une loi de dosage reconstituée en mode « dégradé » c'est-à-dire sans l'apport des capteurs améliorant la précision de dosage, avec les informations du débitmètre. Dans ce calcul les informations de ce dernier peuvent avoir plus de poids.

Il y aura donc une consolidation plus ou moins précise du débit réellement dosé en direction de la chambre de combustion pour chacun des points de fonctionnement surveillés, permettant d'établir une comparaison avec les performances du système dans son état initial.

Les imprécisions des différents capteurs d'amélioration de précision de dosage versus la précision du débitmètre lui-même en fonction des conditions hydrauliques peuvent être prises en compte.

La valeur de débit consolidé Qcons est ensuite comparée à une valeur de débit de référence Qth dans une étape **E70.**

La loi de dosage est enregistrée individuellement de l'organe hydromécanique lors d'essais en production, une correspondance entre la position du doseur et le débit de carburant associé constitue une référence de débit Qth correspondant à plusieurs phases de vol précédemment évoquées.

Tant que la différence entre Qcons et Qth est inférieure à une valeur seuil déterminée, les résultats peuvent être seulement stockés pour être comparés à l'itération suivante et ainsi créer une évolution des paramètres pertinents (étape **E80**).

En revanche, lorsque l'écart est trop important vis-à-vis de l'écart, une alarme peut être déclenchée pour une analyse en maintenance (étape **E90**).

L'ensemble de ces surveillances permet de prévenir et caractériser le vieillissement des sous-organes, aussi bien que de repérer des pannes en cours d'établissement ou dormantes. Le stockage de ce diagnostic en interne à l'équipement permet à l'opérateur de maintenance d'enrichir sa connaissance de l'équipement au fil des heures de vol, et surtout de prévoir de manière plus agile de la maintenance programmée, ainsi qu'évaluer justement la pertinence financière de faire de la maintenance à l'échelle micro au sein de l'équipement ou bien d'ordonner un remplacement.

**Revendications**

**1.** Procédé de surveillance de l'état de fonctionnement d'un bloc hydromécanique de turbomachine d'un aéronef, ledit bloc hydromécanique (100) comprenant

- une vanne de dosage (130), comprenant une pièce mobile (138) de dosage et permettant de générer un débit passant en fonction notamment de la position de cette pièce mobile (138),
- une soupape de régulation (140), configurée pour maintenir un écart de pression ($\Delta P$) prédéterminé aux bornes de la vanne de dosage (130) afin notamment de contrôler le débit (Q) au travers de la vanne de dosage (130),
- un débitmètre (150) apte à mesurer le débit massique (Q) de carburant traversant la vanne de dosage (130),

dans lequel un module de surveillance (300) est configuré pour la mise en oeuvre du procédé selon les étapes suivantes :

- (E20') détermination d'un débit reconstruit à partir de la position de la pièce mobile (138) mesurée par un capteur de position de ladite pièce et d'une mesure de la densité du carburant,
- (E30) calcul d'un résidu correspondant à la différence entre le débit réel mesuré par le débitmètre et le débit reconstruit, et comparaison du résidu à une valeur seuil déterminée, et
- (E90) détermination d'un état de fonctionnement anormal du bloc hydromécanique en fonction du résultat de la comparaison,

dans lequel les étapes de détermination d'un débit reconstruit et de calcul du résidu sont mises en oeuvre pour différents points stabilisés du domaine de vol de l'aéronef, permettant d'obtenir un vecteur de résidus, le vecteur de résidus étant comparé à un vecteur de valeurs seuil déterminées pour les différents points stabilisés afin de déterminer l'état de fonctionnement du bloc hydromécanique, et
dans lequel, si le résidu est inférieur à la valeur seuil déterminée, le résidu est stocké dans une mémoire du module de surveillance (300).

**2.** Procédé de surveillance selon la revendication précédente, dans lequel le bloc hydromécanique comporte également

- un capteur de pression (141) différentielle aux bornes de la vanne de dosage (130),
- un capteur de température (160) configuré pour mesurer une température du carburant,

et dans lequel le débit reconstruit est également déterminé à partir des données de pression différentielle mesurée par le capteur de pression différentielle et de température mesurée par le capteur de température.

**3.** Procédé de surveillance selon la revendication précédente, dans lequel la détermination d'un état anormal du bloc hydromécanique comporte pour les mesures de température, et/ou de densité, et/ou de position du doseur, et/ou de pression différentielle, les étapes de

- (E50) comparaison d'au moins une desdites mesures à un intervalle de valeur nominale d'un capteur à partir duquel la mesure est obtenue, et
- détermination d'un état de fonctionnement anormal du bloc hydromécanique correspondant à une panne ou à une dégradation du capteur, et/ou à une panne ou une dégradation d'un organe interne du bloc hydromécanique associé audit capteur, en fonction du résultat de la comparaison.

**4.** Procédé de surveillance selon la revendication précédente, dans lequel le procédé comporte également les étapes de

- comparaison de la mesure obtenue à partir d'un desdits capteurs à une valeur de référence déterminée dudit capteur ;
- détermination d'un état de fonctionnement anormal du bloc hydromécanique correspondant à une dégradation du capteur ou de l'organe interne du bloc hydromécanique associé audit capteur, en fonction du résultat de la comparaison.

**5.** Procédé de surveillance selon la revendication précédente, dans lequel la valeur de référence est une valeur représentative de valeurs précédemment mesurées.

**6.** Procédé de surveillance selon l'une des revendications 2 à 5, dans lequel le procédé comporte également les étapes de :

- (E60) consolidation du débit carburant reconstitué grâce aux mesures de pression, température, densité avec l'acquisition du débit massique ;
- (E70) comparaison du débit carburant consolidé à une valeur de débit de référence ; et si la différence est supérieure à une valeur seuil déterminée
- (E90) détermination d'un état de fonctionnement anormal du bloc hydromécanique correspondant à une dégradation de la loi de dosage.

**7.** Dispositif de régulation de carburant pour aéronef comprenant un bloc hydromécanique (100), ledit bloc hydromécanique comprenant

- une vanne de dosage (130) comprenant une pièce mobile (138) de dosage et permettant de générer un débit passant en fonction notamment de la position de cette pièce mobile (138),
- une soupape de régulation (140) configurée pour maintenir un écart de pression (ΔP) prédéterminé aux bornes de la vanne de dosage (130) afin notamment de contrôler le débit (Q) au travers de la vanne de dosage,
- un débitmètre (150) apte à mesurer le débit massique (Q) de carburant traversant la vanne de dosage (130),

**caractérisé en ce que** le dispositif de régulation de carburant comporte un module de surveillance (300) configuré pour la mise en oeuvre du procédé selon la revendication 1.

8. Dispositif de régulation selon la revendication précédente, dans lequel le bloc hydromécanique comporte également

- un capteur de pression différentielle (141) aux bornes de la vanne de dosage (130),
- un capteur de température (160) configuré pour mesurer une température du carburant,

le module de surveillance (300) étant configuré pour la mise en oeuvre du procédé selon l'une des revendications 2 à 6.

**Patentansprüche**

1. Verfahren zur Überwachung des Betriebszustands einer hydromechanischen Turbomaschineneinheit eines Flugzeugs, wobei die hydromechanische Einheit (100) umfasst

- ein Dosierventil (130), das ein bewegliches Dosierteil (138) aufweist und die Erzeugung eines Durchflusses ermöglicht, der insbesondere von der Position dieses beweglichen Teils (138) abhängt,
- ein Regulierventil (140), das so konfiguriert ist, dass es eine vorbestimmte Druckdifferenz ($\Delta P$) an den Anschlüssen des Dosierventils (130) aufrechterhält, um insbesondere die Durchflussmenge (Q) durch das Dosierventil (130) zu steuern,
- einen Durchflussmesser (150), der den Massendurchfluss (Q) des durch das Dosierventil (130) fließenden Treibstoffs messen kann,

wobei ein Überwachungsmodul (300) zur Durchführung des Verfahrens gemäß den folgenden Schritten konfiguriert ist:

- (E20') Bestimmen einer rekonstruierten Durchflussmenge auf der Grundlage der Position des beweglichen Teils (138), die von einem Positionssensor des Teils gemessen wird, und einer Messung der Dichte des Treibstoffs,
- (E30) Berechnen eines Rests, der der Differenz zwischen der vom Durchflussmesser gemessenen tatsächlichen Durchflussmenge und der rekonstruierten Durchflussmenge entspricht, und Vergleichen des Rests mit einem bestimmten Schwellenwert, und
- (E90) Bestimmen eines anormalen Betriebszustands der hydromechanischen Einheit in Abhängigkeit vom Ergebnis des Vergleichs,

wobei die Schritte des Bestimmens einer rekonstruierten Durchflussmenge und des Berechnens des Rests für verschiedene stabilisierte Punkte des Flugbereichs des Flugzeugs durchgeführt werden, die es ermöglichen, einen Restvektor zu erhalten, wobei dieser Restvektor mit einem Vektor bestimmter Schwellenwerte für die verschiedenen stabilisierten Punkte verglichen wird, um den Betriebszustand der hydromechanischen Einheit zu bestimmen, und

wobei, wenn der Rest kleiner als der bestimmter Schwellenwert ist, dieser Rest in einem Speicher des Überwachungsmoduls (300) gespeichert wird.

2. Überwachungsverfahren nach vorhergehendem Anspruch, wobei die hydromechanische Einheit ebenfalls umfasst

- einen Differenzdrucksensor (141) an den Anschlüssen des Dosierventils (130),
- einen Temperatursensor (160), der so konfiguriert ist, dass er eine Temperatur des Treibstoffs misst,

und wobei die rekonstruierte Durchflussmenge ebenfalls auf der Grundlage von Differenzdruckdaten, die von dem Differenzdrucksensor gemessen werden, und Temperaturdaten, die von dem Temperatursensor gemessen werden, bestimmt wird.

3. Überwachungsverfahren nach vorhergehendem Anspruch, wobei die Bestimmung eines anormalen Betriebszustands der hydromechanischen Einheit für die Messungen der Temperatur und/oder der Dichte und/oder der Position der Dosiereinrichtung und/oder des Differenzdrucks die folgenden Schritte umfasst

- (E50) Vergleichen mindestens einer der Messungen mit einem Sollwertintervall eines Sensors, von dem die Messung stammt, und
- Bestimmen eines anormalen Betriebszustands der hydromechanischen Einheit, der einem Ausfall oder einer Beeinträchtigung des Sensors und/oder einem Ausfall oder einer Beeinträchtigung eines internen Elements der hydromechanischen Einheit, das dem Sensor zugeordnet ist, entspricht, in Abhängigkeit vom Ergebnis des Vergleichs.

4. Überwachungsverfahren nach vorhergehendem Anspruch, wobei das Verfahren ebenfalls die folgenden Schritte umfasst

- Vergleichen der von einem der Sensoren erhaltenen Messung mit einem bestimmten Referenzwert des Sensors;
- Bestimmen eines anormalen Betriebszustands der hydromechanischen Einheit, der einer Beeinträchtigung des Sensors oder des dem Sensor zugeordneten internen Elements der hydromechanischen Einheit entspricht, in Abhängigkeit vom Ergebnis des Vergleichs.

5. Überwachungsverfahren nach vorhergehendem Anspruch, wobei der Referenzwert ein für zuvor gemessene Werte repräsentativer Wert ist.

6. Überwachungsverfahren nach einem der Ansprüche 2 bis 5, wobei das Verfahren ebenfalls die folgenden Schritte umfasst:

- (E60) Konsolidieren der rekonstituierten Treibstoffdurchflussmenge mittels der Messungen von Druck, Temperatur, Dichte, mit der Erfassung des Massendurchflusses;
- (E70) Vergleichen der konsolidierten Treibstoffdurchflussmenge mit einem Referenzdurchsatzwert; und wenn die Differenz größer als ein bestimmter Schwellenwert ist
- (E90) Feststellen eines anormalen Betriebszustands der hydromechanischen Einheit, der einer Beeinträchtigung des Dosiergesetzes entspricht.

7. Vorrichtung zur Treibstoffregulierung für ein Flugzeug mit einer hydromechanischen Einheit (100), wobei die hydromechanische Einheit umfasst

- ein Dosierventil (130), das ein bewegliches Dosierteil (138) aufweist und die Erzeugung eines Durchflusses ermöglicht, der insbesondere von der Position dieses beweglichen Teils (138) abhängt,
- ein Regulierventil (140), das so konfiguriert ist, dass es eine vorbestimmte Druckdifferenz ($\Delta$P) an den Anschlüssen des Dosierventils (130) aufrechterhält, um insbesondere die Durchflussmenge (Q) durch das Dosierventil (130) zu steuern,
- einen Durchflussmesser (150), der den Massendurchfluss (Q) des durch das Dosierventil (130) fließenden Treibstoffs messen kann,

dadurch gekennzeichnet, dass die Vorrichtung zur Treibstoffregulierung ein Überwachungsmodul (300) aufweist, das zur Durchführung des Verfahrens nach Anspruch 1 konfiguriert ist.

8. Reguliervorrichtung nach vorhergehendem Anspruch, wobei die hydromechanische Einheit ebenfalls umfasst

- einen Differenzdrucksensor (141) an den Anschlüssen des Dosierventils (130),
- einen Temperatursensor (160), der so konfiguriert ist, dass er eine Temperatur des Treibstoffs misst,

wobei das Überwachungsmodul (300) für die Durchführung des Verfahrens nach einem der Ansprüche 2 bis 6 konfiguriert ist.

**Claims**

1. A method for monitoring the operating state of a turbomachine hydro-mechanical unit of an aircraft, said hydro-mechanical unit (100) comprising

- a metering valve (130), comprising a movable metering part (138) and allowing the generation of a passing flow rate, depending in particular on the position of this movable part (138),
- a control valve (140) configured to maintain a predetermined pressure difference (ΔP) at the terminals of the metering valve (130) in order in particular to control the flow rate (Q) through the metering valve (130),
- a flow rate meter (150) able to measure the mass flow rate (Q) of fuel passing through the metering valve (130), wherein a monitoring module (300) is configured for implementing the method according to the following steps:

- (E20') determining a reconstructed flow rate based on the position of the movable part (138) measured by a position sensor of said part, and on a measurement of the density of the fuel,
- (E30) calculating a residue corresponding to the difference between the real flow rate measured by the flow rate meter and the reconstructed flow rate, and comparing the residue to a determined threshold value, and
- (E90) determining an abnormal operating state of the hydro-mechanical unit depending on the result of the comparison,

wherein the steps of determining a reconstructed flow rate and of calculating the residue are implemented for different stabilized points of the flight envelope of the aircraft, allowing obtaining a vector of residues, the vector of residues being compared to a vector of determined threshold values for the different stabilized points in order to determine the operating state of the hydro-mechanical unit, and

wherein, if the residue is less than the determined threshold value, the residue is stored in a memory of the monitoring module (300).

2. The monitoring method according to the preceding claim, wherein the hydro-mechanical unit also include

- a differential pressure sensor (141) at the terminals of the metering valve (130),
- a temperature sensor (160) configured to measure a temperature of the fuel,

and wherein the reconstructed flow rate is also determined based on differential pressure data measured by the differential pressure sensor and temperature data measured by the temperature sensor.

3. The monitoring method according to the preceding claim, wherein the determination of an abnormal operating state of the hydro-mechanical unit includes, for the measurements of temperature and/or of density and/or of position of the metering device and/or of differential pressure, the steps of

- (E50) comparing at least one of said measurements to a nominal value interval of a sensor from which the measurement is obtained, and
- determining an abnormal operating state of the hydro-mechanical unit corresponding to a breakdown or to a degradation of the sensor, and/or to a breakdown or a degradation of an internal member of the hydro-mechanical unit associated with said sensor, depending on the result of the comparison.

4. The monitoring method according to the preceding claim, wherein the method also includes the steps of

- comparing the measurement obtained from one of said sensors to a determined reference value of said sensor;
- determining an abnormal operating state of the hydro-mechanical unit corresponding to a degradation of the sensor or of the internal member of the hydro-mechanical unit associated with said sensor, depending on the result of the comparison.

5. The monitoring method according to the preceding claim, wherein the reference value is a value representative of the previously measured values.

6. The monitoring method according to one of claims 2 to 5, wherein the method also includes the steps of:

- (E60) consolidating the reconstituted fuel flow rate by means of the measurements of pressure, temperature, density, with the acquisition of the mass flow rate;
- (E70) comparing the consolidated fuel flow rate to a reference flow rate value; and if the difference is greater than a determined threshold value
- (E90) determining an abnormal operating state of the hydro-mechanical unit corresponding to a degradation of the metering law.

7. A fuel control device for an aircraft comprising a hydro-mechanical unit (100), said hydro-mechanical unit comprising

   - a metering valve (130) comprising a movable metering part (138) and allowing the generation of a passing flow rate, depending in particular on the position of this movable part (138),
   - a control valve (140) configured to maintain a predetermined pressure difference ($\Delta$P) at the terminals of the metering valve (130) in order in particular to control the flow rate (Q) through the metering valve,
   - a flow rate meter (150) able to measure the mass flow rate (Q) of fuel passing through the metering valve (130),

   **characterized in that** the fuel control device includes a monitoring module (300) configured for implementing the method according to claim 1.

8. The control device according to the preceding claim, wherein the hydro-mechanical unit also includes

   - a differential pressure sensor (141) at the terminals of the metering valve (130),
   - a temperature sensor (160) configured to measure a temperature of the fuel,

   the monitoring module (300) being configured for the implementation of the method according to one of claims 2 to 6.

FIG. 1

# FIG. 2

100

200

150

120

110

160

130  138  140

131,135,137   141

EP 3 942 168 B1

**FIG. 3**

Détection du point de vol — E10

E20

Mesure de la position de la FMV

Mesure de la densité du carburant

Mesure du débit massique réellement dosé — E30

Estimation du débit massique théorique

300

Résidu (débit réel - débit théorique) — E40

Suivi en tendance — E80

Détection / Alerte dégradation FMU — E90

# FIG. 4

EP 3 942 168 B1

**DÉTECTION DU POINT DE VOL**

**CALIBRATION LOI DOSAGE** $Q_{TH} = F(X_{DOSEUR})$

**E20'**

LVDT DOSEUR | CAPTEUR $\Delta P$ | CAPTEUR $\rho$ | CAPTEUR T°

**DÉBIT RECONSTITUÉ** $Q_{REC}$ $= KS . S . (\rho . \Delta P)^{1/2}$

CAPTEUR Q

**DÉBIT RÉEL MESURÉ** WF

**E30**

**E50**

**E40**

$i = 1, 4$

**DIAGNOSTIC DE PANNE / DEGRADATION** ← NON — $|Q_{REC} - WF| < \varepsilon i$

**300**

PANNE / DÉGRADATION DÉCLARÉE

OUI

**E90**

**ALERTE EEC / MAINTENANCE**

**E60**

**CONSOLIDATION DÉBIT DOSÉ** $Q_{CONS}$

DÉGRADATION DÉCLARÉE

**E70**

$i = 1, 4$

**E80**

**STOCKAGE DONNÉES ÉCARTS & SUIVI EN FLOTTE** ← OUI — $|Q_{TH} - Q_{CONS}| > 0$ à iso $X_{DOSEUR}$ — NON

# FIG. 5

EP 3 942 168 B1

## RÉFÉRENCES CITÉES DANS LA DESCRIPTION

**Documents brevets cités dans la description**

- FR 2966518
- US 7526911 B2
- EP 1231368 A1
- FR 2825120 A1
- FR 3069021 A1